# EUROPEAN PATENT SPECIFICATION

(11) **EP 2 627 745 B1**
(45) Date of publication and mention of the grant of the patent: **25.02.2015**
(21) Application number: 11770897.4
(22) Date of filing: 27.05.2011
(51) Int. Cl.: C11C 5/00, C11C 5/02

(54) **MANUFACTURING OF A CAST BLOCK CANDLE - GELPRESSING METHOD**
GELPRESSUNGSVERFAHREN ZUR HERSTELLUNG EINER GUSSBLOCKKERZE
FABRICATION D'UNE BOUGIE-BLOC COULÉE - PROCÉDÉ DE PRESSAGE AU GEL

(30) Priority: 27.05.2010 PL 39134910
(43) Date of publication of application: 21.08.2013
(73) Proprietor: Korona S.A., 98-300 Wielun (PL)
(72) Inventor: CIESLAK, Piotr, PL-98-300 Dabrowa/Wielun (PL); WRÓBEL, Andrzej, PL-98-300 Wielun (PL); ZAWADZKA, Monika, PL-98-345 Mokrsko (PL)
(74) Representative: Pawlowski, Adam
(86) International application number: PCT/PL2011/050015
(87) International publication number: WO 2011/149369

(56) References cited:
- WO-A1-2008/124897
- GB-A- 1 394 550
- GB-A- 190 401 432

## Description

The subject-matter of the invention is a method of making a pillar candle.

The pillar candles manufactured so far, i.e. candles which do not require additional cover to be used and which were made with the use of a traditional method required several operations which used to be time and energy consuming. In this method in order to achieve a good product it was necessary to heat the mould up to the temperature of approx. 60°C and the paraffin of approx. 80°C had to be poured into it. Then the mould was cooled down with water of 12°C, which made the paraffin consolidate. Excessive contractures of the mould charge used to be a frequent effect accompanying this method, which made it necessary to supplement the collapses inside the candle. In view of the fact that this method was time-consuming, the process could only be repeated 36-40 times per day depending on the size and type of the mould. In order to achieve a large output such a process required engagement of substantial quantity of production moulds as well as large amount of energy both for heating up and cooling down the moulds and candles. It also limited the possibility of using ecological raw materials from fully renewable sources.
The method according to the invention consists in cooling the mould down to the temperature from 0 6 (change to 0) to 25 °C before the raw material is introduced, preferably to the temperature from 6 to 25°C, and then the raw material in the form of a thick liquid heated up to the temperature of 30 to 70 (change to 70) °C, preferably up to the temperature from 30 to 55°C, is poured into the mould. After that the raw material undergoes the pressing process.

The method according to the invention enables the manufacture of high quality candles with the use of even 100% of fully renewable raw materials of natural origin as a result of introducing a mixture of oils making the raw materials to be in the form of a thick liquid into these materials.

Example of implementation of the invention.

In the method according to the invention the raw material which is made of a mixture with a large content of renewable material in the form of a thick liquid and heated up to 55oC is used. The mould before being filled with the raw material is heated up to the temperature of 12°C. After the raw material is poured into the mould, the process of pressing the material is carried out in which both the candles are formed and the surface achieves the required texture. The pressing process is carried out in low pressure, preferably at 10 atm. During the pressing process the raw material in the mould is being cooled down. The time needed for the whole process together with cooling down is substantially shorter than in the traditional method.

## Claims

1. The method of manufacturing pillar candles by pouring a flammable raw material in the form of a fluid into a mould, characterized with the fact that before the raw material is introduced, the mould is cooled down to the temperature ranging from 0 - 25°C and the raw material heated up to the temperature from 30 to 70 °C in the form of a thick liquid is poured into the mould and after that the raw material undergoes the pressing process.

2. The method recited in claim 1 characterized with the fact that the mould is cooled down to the temperature from 6 to 25 °C.

3. The method recited in claim 1 characterized with the fact that the temperature of the raw material being poured into the mould is from 30 to 55°C.

4. The method recited in claim 2 characterized with the fact that the temperature of the raw material being poured into the cooled-down mould is from 30 to 55°C.

5. The method recited in claim 3 characterized with the fact that the mould is cooled down to the temperature from 6 to 25 °C.

## Patentansprüche

1. Verfahren zur Herstellung von Stumpenkerzen durch Gießen eines brennbaren Rohmaterials in Form eines Fluids in eine Form, **dadurch gekennzeichnet, dass** vor dem Zuführen des Rohmaterials die Form auf eine Temperatur im Bereich von 0 bis 25 °C abgekühlt wird und das auf eine Temperatur von 30 bis 70 °C erwärmte Rohmaterial in Form einer dickflüssigen Flüssigkeit in die Form gegossen und das Rohmaterial anschließend dem Pressvorgang unterzogen wird.

2. Verfahren nach Anspruch 1, **dadurch gekennzeichnet, dass** die Form auf eine Temperatur von 6 bis 25 °C abgekühlt wird.

3. Verfahren nach Anspruch 1, **dadurch gekennzeichnet, dass** die Temperatur des in die Form zu gießenden Rohmaterials bei 30 bis 55 °C liegt.

4. Verfahren nach Anspruch 2, **dadurch gekennzeichnet, dass** die Temperatur des in die abgekühlte Form zu gießenden Rohmaterials bei 30 bis 55 °C liegt.

5. Verfahren nach Anspruch 3, **dadurch gekennzeichnet, dass** die Form auf eine Temperatur von 6 bis 25 °C abgekühlt wird.

## Revendications

1. Procédé de fabrication de bougies piliers consistant à verser une matière première inflammable sous forme de fluide dans un moule, **caractérisé par le fait qu'**avant l'introduction de la matière première, le moule est refroidi à une température comprise entre 0 et 25°C et la matière première portée à une température comprise entre 30 et 70°C sous forme de liquide épais est versée dans le moule et enfin la matière première subit l'opération de pressage.

2. Procédé selon la revendication 1, **caractérisé par le fait que** le moule est refroidi à une température comprise entre 6 et 25°C.

3. Procédé selon la revendication 1, **caractérisé par le fait que** la température de la matière première versée dans le moule est comprise entre 30 et 55°C.

4. Procédé selon la revendication 2, **caractérisé par le fait que** la température de la matière première versée dans le moule refroidi est comprise entre 30 et 55°C.

5. Procédé selon la revendication 3, **caractérisé par le fait que** le moule est refroidi à une température comprise entre 6 et 25°C.
